# EUROPEAN PATENT APPLICATION

(11) **EP 1 551 131 A1**
(43) Date of publication of application: **06.07.2005**
(21) Application number: 03758104.8
(22) Date of filing: 07.10.2003
(51) Int. Cl.: H04L 12/28, H04B 3/54

(54) **METHOD OF IMPLEMENTING VIRTUAL LOCAL AREA NETWORKS ON ELECTRICAL NETWORK COMMUNICATION SYSTEMS**

(30) Priority: 09.10.2002 ES 200202311
(71) Applicant: Diseno de Sistemas en Silicio S.A., 46980 Paterna (Valencia) (ES)
(72) Inventor: BLASCO CLARET, Jorge Vicente, E-46020 Valencia (ES); RIVEIRO INSUA, Juan Carlos, E-46019 Valencias (ES); GOMEZ MART NEZ, Feliciano, E-46001 Valencia (ES); TEN CEBRIAN, Andrea, E-46021 Valencia (ES)
(74) Representative: Ungria Lopez, Javier
(86) International application number: PCT/ES2003/000505
(87) International publication number: WO 2004/034643

(57) **Abstract**

Facilitates supports for the 802.1q standard on virtual networks (VLAN) and one or more levels of independent proprietary virtual networks (OVLAN) without interference between them. It can also support hierarchical structures so that it includes assigning an OVLAN identification tag (3) for each level; the inclusion of external tags (3) transparent to the frames; the inclusion of tags (3) in the non-tagged frames and the comparison of said tags with the list of permitted or prohibited tags from the output interface of the equipment; and the inclusion of a special identification tag which when detected by the equipments makes these transmit the frame directly to allow directional hierarchical structures.

## Description

### OBJECT OF THE INVENTION

The present invention, as the title suggests, refers to a process for the implementation of virtual local area networks (LAN) over communication systems in the electricity network.

The main idea of the invention is the development of a new VLAN architecture, that the invention calls proprietary VLAN (OVLAN) for the nodes of the electricity network, as well as supporting the 802.1q standard for virtual networks.

The objective of the invention allows multiple levels of OVLAN to be obtained and the possibility to allow hierarchical virtual networks, which is adequate the for usual topology in communication systems over the electricity network, since this topology is in tree form, that is to say hierarchical. Furthermore, another objective of the invention is to allow the introduction of directionality in the hierarchical structure so that the equipments of the same hierarchy cannot see the equipments in their own hierarchy while they can see the equipments associated of superior hierarchies. With the process of the invention the OVLAN and those defined by the standard 802.1q are compatible and can work in parallel without interference.

### BACKGROUND TO THE INVENTION

The use of virtual local area networks (LAN) is known in the state of the art, these being networks formed by equipments that can communicate between themselves but which are not limited by the physical location of said equipments, rather they can communicate as if they were physically connected to the same physical segment of a local area network (LAN) although being in different physical segments of the network, and they can isolate themselves from the equipments belonging to another VLAN even though they are connected to the same physical segment. Thanks to virtual networks it is possible to create virtual work groups, reduce the transport costs of equipments between physical segments of a VLAN, reduce the costs of the level 3 routers in OSI (Open Systems Interconnection) architecture that may have less capacity, and reduce the amount of traffic directed to all users, that is to say, broadcast traffic, and the traffic directed to groups of users, that is to say, multicast traffic. OSI is a reference module created by ISO (International Standards Organisation) as the first step to standardising the protocols for computers based on layers, that is, a model to connect open systems to communication with other systems.

The use of VLANs is known in the state of the art, following the IEEE 802.1q standard that was developed to treat the problem of how to divide the large networks of computers into smaller parts, so as to carryout broadcast and multicast traffic without using more bandwidth than necessary. Furthermore, this standard brings a higher level of security between internal segments of the networks.

The specification for 802.1q establishes a method to insert information of belonging to a VLAN within the Ethernet frames. In a VLAN network, the broadcast and multicast traffic is delivered to all the end stations, but this traffic cannot surpass the limit of the VLAN, since the frame will be discarded if the user does not belong to the VLAN indicated in the frame. Therefore, it is not possible to implement various levels of virtual networks, the number of virtual networks that can be defined is reduced and they cannot carry out hierarchical structures with directionality following the specification of the standard, therefore this standard is not adequate for communication systems over the electricity network in which hierarchical structures are employed.

The 802.1q is based on adding specific bits within the Ethernet frame to achieve tagging that recognises the equipments belonging to the VLAN.

These specific bits are known as "tag header" and contain a virtual identification VID. Therefore, the 802.1q standard only allows one level of VLAN since it only adds one "tag header" with the VID to each Ethernet frame.

### DESCRIPTION OF THE INVENTION

To achieve the objectives and avoid the inconveniencies indicated in the previous paragraphs, the invention has developed a new process of implementing VLAN in communication systems over the electricity network, in which frames are sent between the different equipments that are connected to the electricity network; the equipments supporting the VLAN standard 802.1q described in the previous paragraph, which consists of inserting an identification tag in a reserved space within the frame to indicate that the frame belongs to a VLAN, so that if the frame is tagged, when received by the equipment, said equipment compares the tag to a list of permitted tags in the output interface of the equipment, and if it is not tagged, it carries out tagging prior to comparison.
The novelty of the invention is characterised by comprising:
the assignation of an OVLAN identification tag for each level of OVLAN implemented to permit a structure of multiple, hierarchical OVLANs and in different levels;
the inclusion of external tags that are transparent to the frames;
the inclusion of external tags in the non-tagged frames and the comparison of said tags with a list of permitted or prohibited tags in the output interface of the equipment, so that if a frame arrives from a node and it is addressed to an address by means of a port with the prohibited OVLAN tag or with a tag that is not on the permitted list for said node, said frame is discarded; and
the inclusion of a special identification tag, which when detected by the equipments makes these transmit the frame directly to allow hierarchical structures with directionality in which the equipments from different OVLANs of the same level in the hierarchy cannot receive or send packets to the equipments of the rest of the OVLANs in the same hierarchical level, while they can send and receive to the equipments superior in the hierarchy in the same OVLAN.
This process has an important advantage in that it allows the isolation of
different end points for each virtual network, so that the users attached to each end point are not accessible from other virtual networks. This fact implies a different VLAN for each terminal equipment, which surpasses the number of configurable networks in the 802.1q standard in a large number of the applications over the electricity network, and overcomes the deficiency presented by the standard.

Therefore, the special tagging allows directionality, a characteristic not considered in the 802.1q standard, since the frames tagged with the special tagging can reach any node in the virtual network without the need to alter the output tag lists.

It also permits a structure of multiple OVLANs with multiple layers, thus facilitating easy application to communications over the electricity network, where the structure is in tree or hierarchical form. Furthermore, the invention allows the process to be extended beyond the electricity network.

The invention also allows facilitates an structure independent from the VLANs of the 802.1q standard, and which functions without interference and in parallel with said standard, due to the fact that the information travels with the Ethernet frame but does not alter it when tags are added externally and in a manner transparent to said frames.

The invention allows the combination of topologies where there exist networks defined by the 802.1q standard and networks according to this invention, making hybrid topologies that support both technologies.

Therefore, the invention does not alter the Ethernet frame, which makes it compatible with said standard.

By means of the special identification tag, the frames can reach any node in the OVLAN without being discarded.

The identification tag of a level is added when the frame entered in the equipment at said level from a superior level, said identification tag of a level is extracted when the frame exists the equipment at this level to an upper level.

The OVLAN identification tags contain the number of the OVLAN to which the traffic sent in the frame belongs.

In one embodiment of the invention the OVLAN identification tag is extracted when the frame leaves the electricity network so as to limit the OVLAN to said electricity network.

The list of transmission identification tags is selectively constituted by a list of permitted or prohibited tags, thereby ignoring the frame if the identification tag is on the prohibited list or not on the permitted list.

In another embodiment the OVLAN identification tag is transmitted when the frame leaves the electricity network to extend the VLAN to devices that are not connected to the electricity network.

In transmission, when the identification tag of a frame is a special identification tag, the frame is transmitted directly without having the equipment consult its list of transmission tags.

The following drawings are provided to facilitate a better understanding of the present invention and while forming an integral part of the detailed description and the claims, they offer an illustrative but not limited representation of the principles of this invention.

### BRIEF DESCRIPTION OF THE DRAWINGS

**Figure 1. -** Shows the typical tree structure of communication systems over the electricity network, where various VLAN levels are defined.
**Figure 2.** - Shows an example of the hybrid diagram of virtual networks (VLAN) where a virtual network can contain other virtual networks.
**Figure 3.** - Shows an example of a scenario where medium and low voltage transformers communicate by a optical fiber ring network that must support various low voltage networks where the proprietary virtual networks are situated.
**Figure 4.** - Shows the structure of the internal frame of the system of communication over the electricity network with the OVLAN identification tag according to the invention, which is external to the Ethernet frame.
**Figure 5.** - Shows the physical blocks to be included in all nodes to allow implementation of the process of the invention.
**Figure 6.** - Shows a flow diagram of one possible implementation of the process of the invention in a hybrid plan of virtual networks, that jointly support VLAN standard 802.1q and the OVLAN foreseen by the process in this invention.
**Figure 7.** - Shows a virtual network diagram in hierarchical form where the up and down directionality of nodes from different hierarchies can be observed.

### DESCRIPTION OF AN EMBODIMENT OF THE INVENTION

This section provides a description of an example of one embodiment of the invention, referencing the numbering used in the drawings.

It is known that electrical energy is distributed over a high voltage network, a medium voltage network and finally it is distributed to customers by means of a low voltage network. The medium voltage networks also known as medium voltage are, in general, interconnected transformers of medium to low voltage.

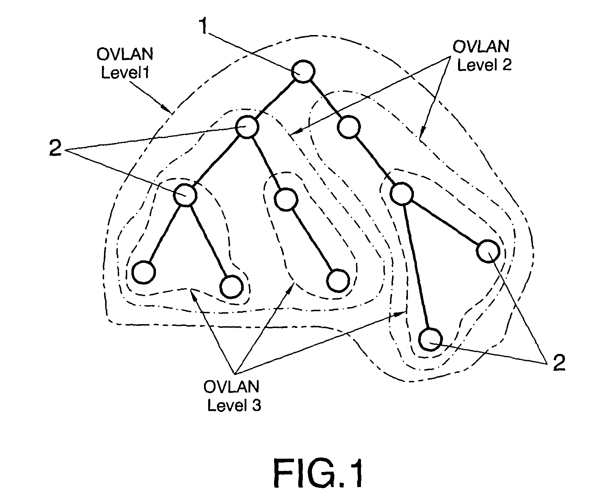

The low voltage networks tend to have a tree structure, so that when using a communication system over the electricity network, the head end equipment is situated in the medium to low voltage transformer which allows the distribution of medium voltage to the low voltage network, while the repeaters and user equipments are located at different points on the network and they communicate in both directions with the head end. In this case it is convenient to create various levels of independent virtual networks as shown in Figure 1 such as level 1 to level 3. Such networks cannot be created using the 802.1q standard, since as explained in the section concerning the background art to the invention, this only supports one level.

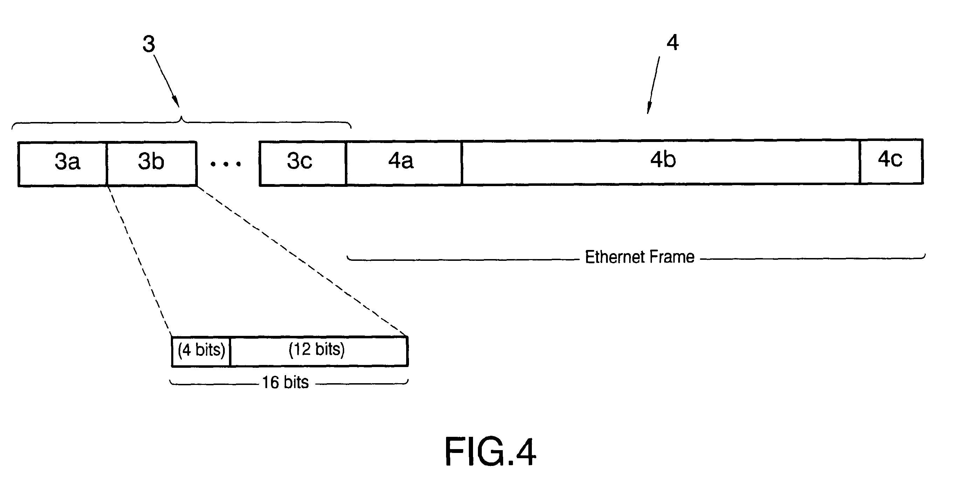

Therefore, it is necessary to create a process of implementation of virtual networks independent of the standard, whose principal characteristic consists of placing one or more external tags 3 in the frames sent. This is shown in Figure 4, which will be explained later, where the reference 3a represents the tag of level N, 3b the tag of N-1 and 3c the tag of level 1. As shown in Figure 4 the external tags 3 are added to the frames 4 that are transmitted over the electricity network, suppressing said external tags 3 of the frames 4 when they leave said electricity network, that is, so that the creation of said levels and virtual networks is transparent to the electricity network.

This solution allows the use of independent virtual networks known as proprietary virtual networks (OVLAN) that can act separately without interference in one or various different levels. Therefore, including the OVLAN results in multiple configurations of virtual networks that can be applied to a communications system over the electricity network. One of the possible configurations consists simply in not using virtual networks, that is, each user may see any other user in a local area network (LAN), connected to a communication node 2 by the electricity network. Another possibility is to use the 802.1q standard in which the networks are established by client, or to establish a VLAN by groups of nodes 2, or more than one OVLAN by group of nodes 2, so that the traffic is maintained within said group, where this group is able to contain one or more nodes of the electricity network. Another possibility is that the OVLAN may be maintained within the electricity network and have hierarchical, flat or hybrid structures.

A hierarchical structure is a tree structure, which as has been indicated is typical in low voltage networks, in which directionality must be offered to allow nodes from upper hierarchies communicate with nodes from lower hierarchies, that is to say, that the nodes situated closer to the root of the tree system of the network may communicate with those situated in the branches of the electricity network.

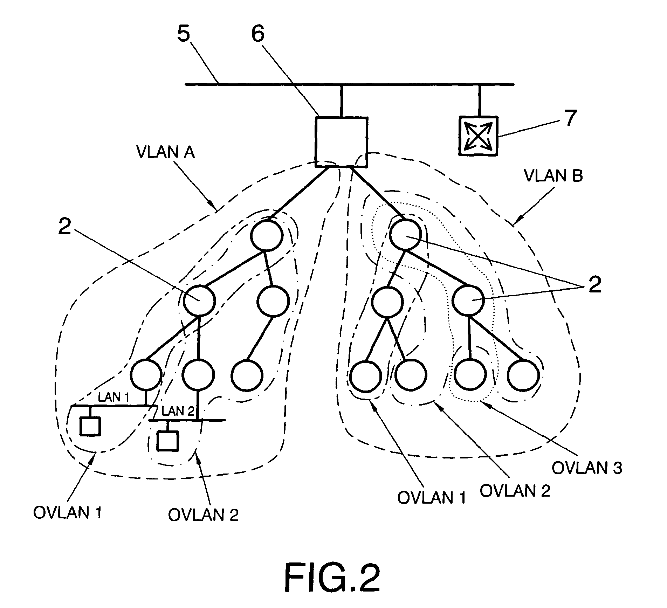

A flat network is one in which all the nodes 2 belong to the same level in the hierarchy, which is the only scenario considered by the standard 802.1q. A hybrid network is that in which both types of network exist, which is the scenario for networks which support the 802.1q standard and the OVLAN networks obtained through the process described in this invention. This diversity of topologies is shown in figure 2 where two virtual networks VLAN A and VLAN B, both following the 802.1q standard exist along with various OVLAN networks that follow the procedure of this invention and which are referred to as OVLAN1 - OVLAN 3 within the VLAN A-B. In this Figure all the nodes 2 belonging to the VLAN A accept and send frames belonging to this VLAN A. On the other hand, the nodes of OVLAN1, within the OVLAN2, do not receive the traffic of OVLAN2, even-though both belong to the same VLAN A.

In Figure 2, the trunk network is shown by the reference 5, and in which a switch 6 is shown which communicates the trunk network 5 with the electricity network, said switch in general being the head end equipment located preferable in the medium to low voltage transformer. The switch 6 carries out the switching between the trunk network 5 and one or other part of the network, according to the philosophy of OSI levels.

On the other hand, the reference 7 shows a router that is network level device of the OSI architecture to allow communication between two equipments not directly connected by the routing process. It can be used to communicate nodes from different OVLANs that are not connected to the trunk network.

The process of the invention is not limited to the low voltage network, but can also be used in others, even if they do not have a hierarchical structure.

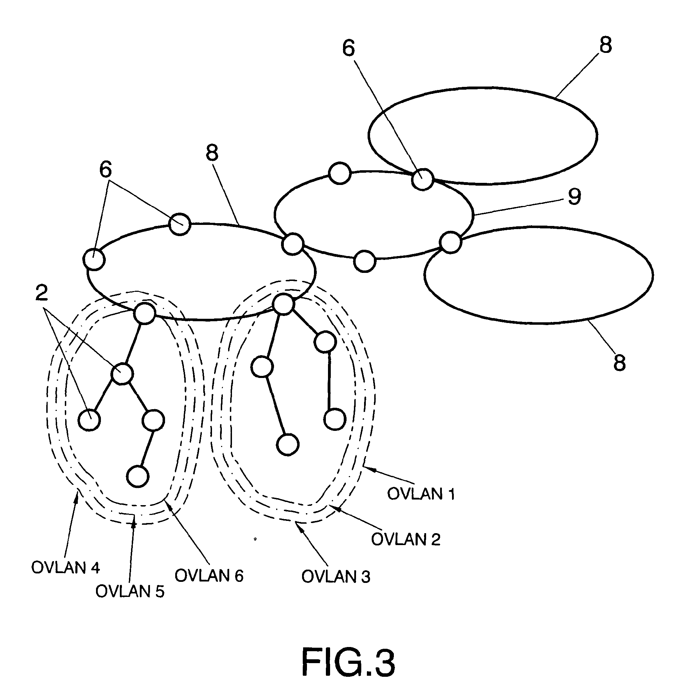

It is possible to place communication nodes in the medium to low voltage transformers with which communication networks are formed using the medium voltage ring, as is shown in Figure 3. In said Figure, a typical scenario is shown where multiple rings 8 are connected over a optical fiber network 9. The low voltage networks hang from each transformer 6 on the medium voltage ring, similar to that shown in Figure 1, and in which the process of this invention may be implemented. For simplicity these Figures only show a series of nodes in the part of the low voltage that may form part of various OVLANs. These OVLANs, in general can be overlapped or be similar to those in Figure 1, allowing hierarchical structures of various levels. If they areoverlapped, they may use different OVLANs for different types of traffic, in this way isolating the nodes.

In the example in Figure 3, the networks are superimposed, although in the generic implementation this will not be necessary.

The low voltage networks normally have between 200 and 500 equipments connected. In each medium voltage network there are approximately 30 transformers of medium to low voltage and furthermore the optical fiber networks that connect the medium voltage tend to connect approximately to groups.

Therefore, multiplying the number of end equipments that hang from each ring it can be seen that the number of nodes is so high that is it is impossible to isolate them by following the 802.1q standard. However, using VLANS of the standard in combination with the OVLANs of the process in this invention, allows this isolation to be carried out, taking advantage of the hierarchy in the electricity network.

Using the process of this invention, and supposing that there is minimum of three OVLANs in each low voltage network, there will be ninety OVLANs in total for each medium voltage ring, which can be supported by the process of this invention, principally by the possibility to use multiple tagging.

For this it is enough to use a tag of two bytes, since it has enough bits to recognise the OVLANs in the same level.

Of the sixteen bits in the tag 3, twelve are used to codify the number of OVLAN, which implies that up to 4096 different OVLAN may be defined in each level. The remaining 4 bits are reserved for future applications which permit the extension of the system.

Furthermore, as previously shown, the Ethernet frame is not modified, so that its header 4a, data 4b and cyclical redundancy code 4c (CRC) are maintained as originally transmitted, which permits support of the standard protocol 802.1q.

In this scenario the traffic on the trunk network, that does not have the correct tagging, cannot reach the low voltage network but can cross the medium voltage ring 8, and for which the filtration of tags at the entry to the low voltage network is carried out, as described below, discarding the frames that are not adequately tagged.

For this lists of permitted tags and/or prohibited tags are included in the nodes so that frames 4, with a tag 3 not included in the permitted tags or included in the prohibited tags, are discarded.

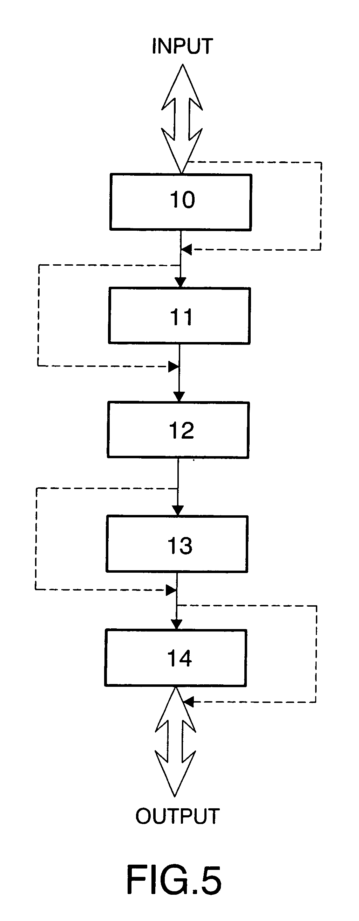

Figure 5 shows a generic diagram of the blocks required in each node in the communication system to support the OVLAN networks of this invention and those defined by the 802.1q standard, that is to say, to process the tags 3 included along with the frames 4 and the VLAN information included in the Ethernet frame 4.

Therefore, a first block 10 is foreseen for the processing and input control of the tag in the OVLANs, which allocates an adequate external tag 3 to the frame 4, if it does not carry one, and which can discard the frame if it carries a tag when it should not or if it does not carry tag when it should.

Once the input control 11 of the 802.1q standard (if activated) has been carried out the packet is sent to level 2 (data connection level) of the OSI architecture in block 12 which selects an output interface for the packet.

Finally, the output control 13 of the 802.1q standard (if this is active) is carried out and the output control 14 of the tagged OVLAN so as to it compares the tag in the frame with the list of permitted or prohibited output tags, so as to discard the packet if according to the tag, said node should not carry out the transmission of said frame.

As a consequence, in general it is sufficient to implement block 12, which carries out the level 2 bridge, where the possibility exists of disconnecting or omiting the blocks that implement the input-output according to the 802.1q standard (11 and 13) and the input-output according to the OVLANs (10 and 14). The input control 10 along with the output control 14 may be de-activated as well as the input control 11 of the 802-1q along with the 802.1q output control 13, with the advantage of being able to work independently with one or other implementation.

The implementation of the OVLANs takes internal and external ports in the electricity network into account, which constitutes a difference with respect to the standard and allows the superimposition of networks due to the fact that the behaviour varies depending on whether the port is internal or external. All tags are eliminated by default on exiting an external port. A port is internal when it is used to carry out the connection between nodes connected to the electricity network, while the port is external when used to have a node communicate with any entity outside the electricity network.

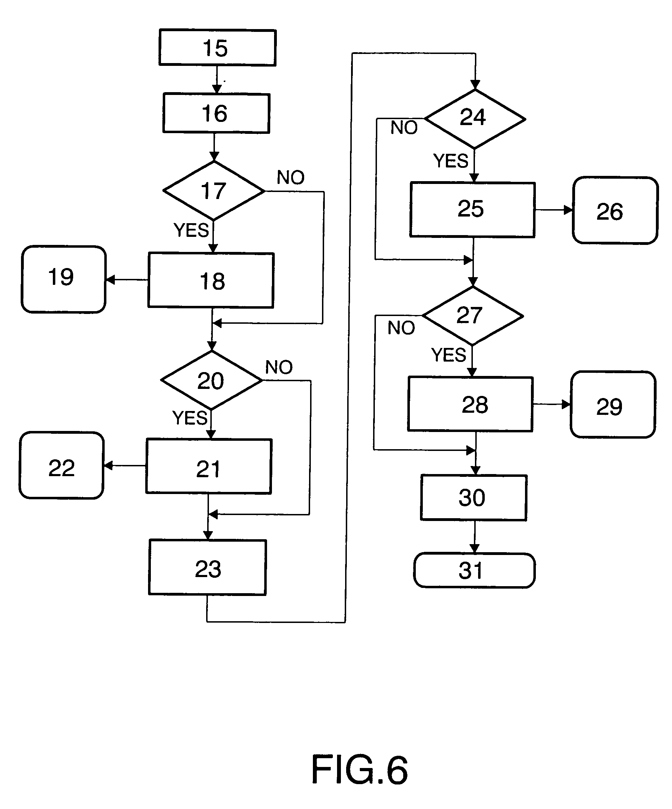

Figure 6 shows the flow diagram of a possible implementation of the process of this invention in which hybrid networks are supported.

In the received frame 15 the port of origin is verified 16 and verification 17 also takes place to see if the OVLAN is activated in this node (that is to say, filtration and the input rules for the OVLAN have to be carried out. In the affirmative case, verification 18 of whether the frame carries a tag or not takes place, and appropriate frames are discarded 19, as has been explained previously.

In case the OVLAN in the node is not activated or if the frame is not discarded, verification 20 takes place to see if the 802.1q standard is activated in the node, that is to say, to verify if the rules of the standard have to be applied or not). The process of checking the input rules is carried out in 21 and in case it is necessary, the discarding takes place at 22.

Following on the process of sending the frames takes place 23. Once a frame is processed and to be able to transmit this, verification 24 takes place to see if the standard is active and in the affirmative the list rules 25 are applied so as to discards the frame 26 if necessary. In case the standard is not activated or in case the frame is not discarded verification 27 takes place to see if the OVLAN rules apply and if this is so, the lists 28 to discard the frame 29 are applied.

In case the OVLAN rules are not activated within the node or have not been discarded by the frame, the filtered frame is obtained 30 and the transmission carried out 31. Therefore from this Figure it can be said that in general if the OVLAN network is active the OVLAN input and output rules are applied, while if the 802.1q network is active the input and output rules of this standard are applied. If the frame does not fulfil one of the permitted rules in the standard of those prohibited/permitted in the OVLAN, it is discarded in the process of sending the frame 23 or before transmission of the frame to the network 31.

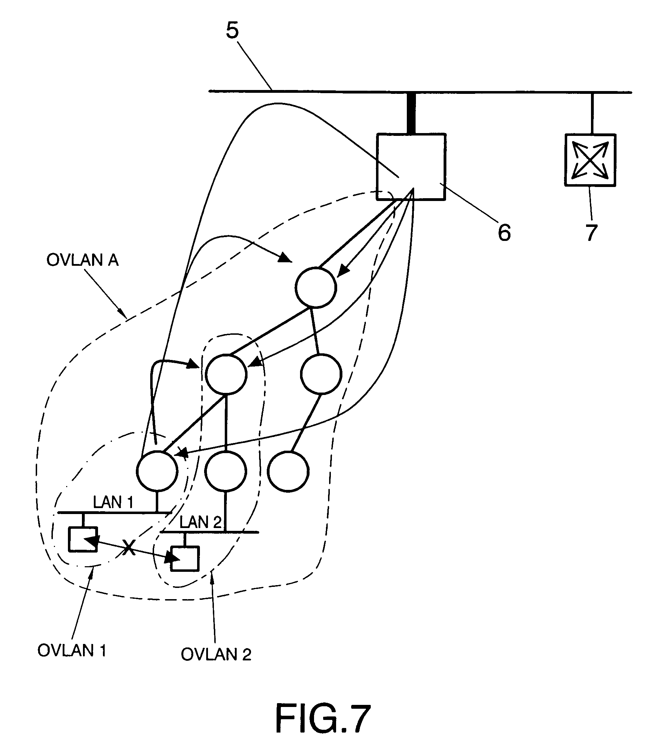

Furthermore, the inclusion of one or more external tags in the Ethernet frame and the process specified in this invention facilitate the carrying out of hierarchical structures with directionality something that cannot be carried out following the standard mentioned. In Figure 7 an example of the hierarchic diagram is shown. This Figure is similar to Figure 2 but the arrows show the directionality achieved with the network. Directionality means equipments of the same hierarchy cannot see one another represented in the Figure by the arrows over which an X is superimposed, since they do not belong to the same OVLAN. To be able to do this they must use a higher level of the OSI architecture, that is, they cannot communicate without passing by the router 7 in level 3 of the ISO architecture, if and only if they do not belong to the same OVLAN. On the other hand these same equipments can see equipments associated with superior hierarchies, that is, they can send and receive packets to these. Nodes from a superior hierarchy can send messages to those in an inferior hierarchy by using a special tag, with the same configuration as the external tag 3 as shown in Figure 4 but with a specific reference code for said tag. This tag is known as ALLVLAN. In the process of entering and exiting the nodes the external tag is compared to a series of permitted and prohibited values. Therefore, if the frame has the ALLVLAN tag these processes are ignored and the frames are sent directly. This reduces the contents of the list in the tree structure such as those of the low voltage electricity distribution network.

In the same manner, when a node higher up in the hierarchy 1, as shown in Figure 7, receives frames from the trunk network 5, directed to a node that is directly connected or via other nodes of the communication system, a special ALLVLAN tag is added to these frames thereby avoiding that intermediate nodes discard said frames, and therefore they can arrive to any equipment in any hierarchy following which their destination direction will be selected.

## Claims

1. **PROCESS NETWORKS OVER COMMUNICATION SYSTEMS IN ELECTRICITY NETWORK,** in which frames are sent between various equipments (2) connected to the electricity network; said equipments (2) supporting a 802.1q standard for virtual local area networks (VLAN) consisting on inserting an identification tag in a space reserved within the frame to indicate that the frame belongs to a VLAN, when the frame is received by the equipments, if the frame is tagged, said equipments compare the tag with a list of permitted tags in an output interface of the equipment, and if not tagged, the equipments carry out tagging prior to comparison; **characterized in that** it comprises:
- assignation of a proprietary virtual local area network (OVLAN) identification tag (3) for each level of OVLAN implemented to permit a structure of multiple, hierarchical OVLANs and in different levels;
- inclusion of external tags (3) transparent to the frames;
- inclusion of external tags (3) in non-tagged frames and comparison of said tags with a list of permitted or prohibited tags in the output interface of the equipment, and
- inclusion of a special identification tag (ALLVLAN), which when detected by the equipments (2) makes the equipments transmit the frame directly to allow hierarchical structures with directionality in which the equipments from different OVLANs of a same level in the hierarchy cannot receive or send packets to the equipments in the same hierarchical level as the rest of the OVLANs, while said equipments can send to and receive from the equipments superior in the hierarchy in the same OVLAN.

2. **PROCESS FOR IMPLEMENTING VIRTUAL LOCAL AREA NETWORKS OVER COMMUNICATION SYSTEMS IN THE ELECTRICITY NETWORK**, according to Claim 1, **characterised in that** the identification tag (3) of one level is added when the frame enters a equipment at said level from a higher level.

3. **PROCESS FOR IMPLEMENTING VIRTUAL LOCAL AREA NETWORKS OVER COMMUNICATION SYSTEMS IN THE ELECTRICITY NETWORK**, according to Claim 2, **characterised in that** the identification tag from one level is extracted when the frame exists a equipment at said level to a higher level.

4. **PROCESS FOR IMPLEMENTING VIRTUAL LOCAL AREA NETWORKS OVER COMMUNICATION SYSTEMS IN THE ELECTRICITY** NETWORK, according to Claim 1, **characterised in that** the OVLAN identification tags contain the number of OVLAN to which the traffic sent in the frame belongs.

5. **PROCESS FOR IMPLEMENTING VIRTUAL LOCAL AREA NETWORKS OVER COMMUNICATION SYSTEMS IN THE ELECTRICITY NETWORK,** according to Claim 1, **characterised in that** the list of transmission identification tags is selectively constituted by a list of permitted or prohibited tags, to discard the frame if the identification tag is in the list of prohibited tags or if it is not in the list of permitted tags.

6. **PROCESS FOR IMPLEMENTING VIRTUAL LOCAL AREA NETWORKS OVER COMMUNICATION SYSTEMS IN THE ELECTRICITY NETWORK,** according to Claim 1, **characterised in that** the OVLAN identification tag is extracted when the frame comes out of the electricity network in order to limit the OVLAN to said electricity network.

7. **PROCESS FOR IMPLEMENTING VIRTUAL LOCAL AREA NETWORKS OVER COMMUNICATION SYSTEMS IN THE ELECTRICITY NETWORK,** according to Claim 1, **characterised in that** the OVLAN identification tag is transmitted when the frame leaves the electricity network, in order to extend the VLAN to device that is not connected to the electricity network.

8. **PROCESS FOR IMPLEMENTING VIRTUAL LOCAL AREA NETWORKS OVER COMMUNICATION SYSTEMS IN THE ELECTRICITY NETWORK,** according to Claim 1, **characterised in that** in transmission, when the identification tag (3) of a frame is an ALLVLAN special identification tag, the frame is directly transmitted without the equipment consulting the list of transmission tags.
